# EUROPEAN PATENT SPECIFICATION

(11) **EP 4 112 378 B1**
(45) Date of publication and mention of the grant of the patent: **24.04.2024**
(21) Application number: 22179056.1
(22) Date of filing: 14.06.2022
(51) Int. Cl.: B60P 7/08, F16M 11/04, F16M 13/02, B60P 3/077

(54) **A KIT COMPRISING A MULTIPLE SUPPORT DEVICE FOR WHEEL CHOCKS AND AT LEAST ONE WHEEL CHOCK**
KIT MIT EINER STÜTZVORRICHTUNG FÜR RADKEILE UND MINDESTENS EINEM RADKEIL
KIT COMPRENANT UN DISPOSITIF DE SUPPORT POUR CALES DE ROUE ET AU MOINS UNE CALE DE ROUE

(30) Priority: 02.07.2021 IT 202100017522
(43) Date of publication of application: 04.01.2023
(73) Proprietor: Lokhen S.r.l., 70022 Altamura, Bari (IT)
(72) Inventor: BARATTINI, Daniele, I-70022 Altamura, BARI (IT); GRECO, Luca Oronzo, I-70022 Altamura, BARI (IT)
(74) Representative: Mitola, Marco

(56) References cited:
- EP-A1- 0 382 587
- EP-A2- 0 162 829
- WO-A1-2014/041578
- DE-U1-202016 005 023
- US-A- 3 785 501

## Description

### FIELD OF APPLICATION

The present invention relates to a kit comprising a multiple support device for wheel chocks and at least one wheel chock.

### BACKGROUND ART

As known in the transport field, chocks, i.e., wheel chocks, are frequently used, which are arranged at the wheels of the vehicle and/or trailer, so as to prevent any movement thereof, for example due to the presence of a steep terrain.

Therefore, wheel chocks are components subjected to high mechanical stresses because they must be capable of withstanding heavy loads of several tons and are normally exposed to the weathering action.

Indeed, the chocks are not normally kept in the driver's cab of the vehicle, on the contrary, they are placed on the trailer, in a substantially vertical position, at least partially housed or supported by support devices referred to as chock racks, usually fixed to the frame of the vehicle.

Such support devices can be of various type, and on the one hand they must always ensure the easy extraction of the chocks as needed, and on the other hand, they must avoid the chocks from moving (causing bothersome noises) due to vibrations, being accidentally uncoupled, oscillating or even falling from the vehicle.

For this purpose, for example, there are support devices having a bag or cradle configuration and open on an upper side so as to allow the top insertion of the chocks.

Such devices usually consist of metal or plastic partitions, conveniently peripherally folded, shaped so as to delimit seats adapted to accommodate at least partially the chocks in an interlocking manner. However, such solutions are rather cumbersome, do not allow supporting two chocks together unless creating structures of dimensions that would be excessive and unsuitable for use, and also are a receptacle for dust, mud and the like, given the geometric shape thereof and given that they are arranged outdoors.

Rod-like chock holder solutions also exist, the rod being connected in a cantilevered manner on a portion of the vehicle or trailer frame. The rod is shaped so as to lock and prevent the chock from oscillating. Such a known solution is certainly less bulky, but is not capable of entirely avoiding the oscillations of the chocks during the travel of the vehicle and the related noise reducing the travel comfort.

Moreover, the known rod solutions are not always capable of avoiding the accidental uncoupling of the chock and subsequent loss thereof during the travel of the vehicle. A solution according to prior art is disclosed by WO 2014/041578 A1.

### PRESENTATION OF THE INVENTION

Therefore, the need is felt to solve the drawbacks and limitations mentioned above with reference to the prior art.

Such a need is met by a kit according to claim 1.

### DESCRIPTION OF THE DRAWINGS

Further features and advantages of the present invention will become more comprehensible from the following description of preferred embodiments thereof, given by way of non-limiting examples, in which:

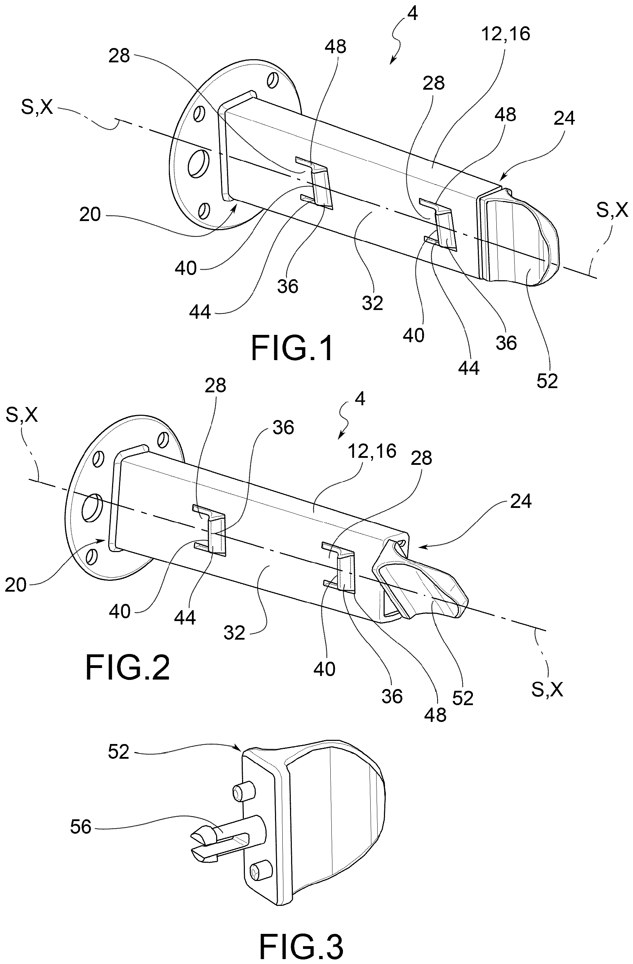

Figure 1 shows a perspective view of a multiple support device for wheel chocks according to an embodiment of the present invention, in the release configuration;
Figure 2 shows a perspective view of the multiple support device for wheel chocks in Figure 1, in the locking configuration;
Figure 3 shows a perspective view of a safety catch according to the embodiment in Figure 1;

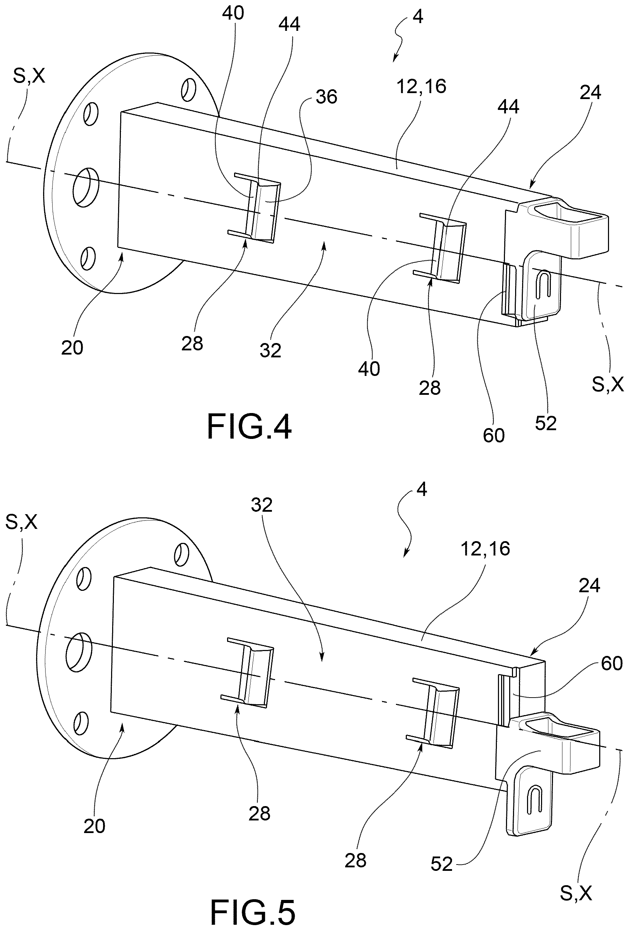

Figure 4 shows a perspective view of a multiple support device for wheel chocks according to a further embodiment of the present invention, in the release configuration;
Figure 5 shows a perspective view of the multiple support device for wheel chocks in Figure 4, in the locking configuration;

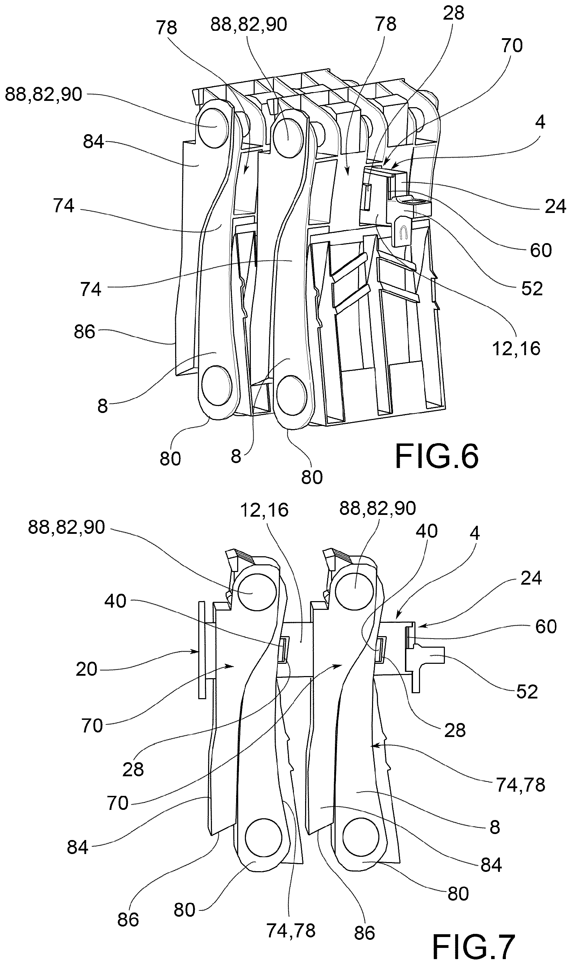

Figure 6 shows a perspective view of a kit comprising a multiple support device and two wheel chocks fixed thereon;
Figure 7 shows a side view of the kit in Figure 6.

The elements or parts of elements common to the embodiments described below will be indicated using the same reference numerals.

### DETAILED DESCRIPTION

With reference to the aforesaid drawings, a multiple support device for wheel chocks 8 is indicated as a whole by reference numeral 4.

The multiple support device 4 for wheel chocks 8 comprises a support rod 12 having a body 16 with a main extension along a main extension axis X-X, from an attachment end 20 to an associable vehicle frame, to a cantilevered end 24, adapted to receive as an insertion at least one wheel chock 8 for said vehicle.

The body 16 is provided with at least one fastening lug 28 projecting from at least one side wall 32 of the body 16 so as to intercept and lock as an undercut an associable wheel chock 8, insertable on the body 16 along an insertion direction S-S parallel to said main extension axis X-X.

Preferably, at least two fastening lugs 28 are provided, spaced apart along the main extension axis X-X so as to allow the locking of at least two wheel chocks 8 arranged in series along the insertion direction S-S.

According to a possible embodiment, the fastening lugs 28 have a wedge shape comprising a first insertion ramp 36 facing the cantilevered end 24, and a second locking ramp 40 facing the attachment end 20.

When inserting the wheel chock 8, the first insertion ramp 36 works to allow the insertion of the wheel chock 8 while the second locking ramp 40, once the first insertion ramp 36 has been passed, acts as an undercut to prevent the removal of the wheel chock along the insertion direction S-S.

The insertion ramps 36 and the locking ramps 40 are connected to one another at a chamfered vertex 44.

According to a possible embodiment, said insertion ramps 36 and locking ramps 40 have different inclinations with respect to a plane perpendicular to said side wall 32 of the body 16.

It is generally preferable for the inclination of the insertion ramp 36 to be less than the inclination of the locking ramp 40: thereby, the insertion of the wheel chock 8 is promoted and the removal thereof from the support rod 12 is not promoted.

According to a possible embodiment, the fastening lugs 28 are elastic lugs and have a recess 48 at the side wall 32 of the body 16 so as to bend and at least partially enter the recess 48 during the insertion and/or extraction of the wheel chocks 8 to/from the multiple support device 4.

According to an embodiment, the body 16 has pairs of fastening lugs 28 arranged at the same axial position, along the main extension axis X-X, and on side walls 32 of the body 16 opposite to each other with respect to a transverse direction T-T, perpendicular to the main extension axis X-X.

According to an embodiment, the body 16 has a non-circular cross-section with respect to a cross-section plane perpendicular to the main extension axis X-X.

Thereby, as better described below, once inserted on the support rod 12, the wheel chock 8 cannot rotate parallel to the main extension axis X-X.

For example, said non-circular cross-section of the body 16 is a closed polyline.

Preferably, said non-circular cross-section of the body 16 is a quadrangular cross-section, for example square or rectangular.

According to a possible embodiment, the body 16, at the cantilevered end 24, comprises a safety catch 52 shaped to move from a release position, in which it does not interfere with a section of the body 16 with respect to a cross-section plane perpendicular to said main extension axis X-X, so as to allow the insertion of at least one wheel chock 8 through said cantilevered end 24 parallel to said main extension axis X-X, to a locking position, in which it interferes with said section so as to prevent the extraction of said at least one wheel chock 8 from the side of said cantilevered end 24, parallel to said main extension axis X-X.

For example, the safety catch 52 is an element rotating about a pin 56 parallel to the main extension axis X-X.

The safety catch 52 can also be an element translating along a transverse direction, directed along a plane perpendicular to the main extension axis X-X.

Preferably, said transverse direction is a vertical direction so that the weight itself of the safety catch 52 biases the safety catch 52 to closing or locking position, therefore to a safety position.

In the translating configuration, the safety catch 52 preferably slides along at least one linear guide 60 which can have a dovetail configuration, for example.

According to a possible embodiment, the safety catch 52 is shaped to perform an end-of-stroke snap movement upon reaching the locking position.

The present invention also relates to a kit comprising at least one multiple support device 4, as described above, for wheel chocks 8 and a pair of wheel chocks 8.

In particular, each wheel chock 8 is provided with a through hole 70, parallel to said body 16 of the multiple support device 4 and shaped to be inserted on the body 16 of the multiple support device 4, on the side of the cantilevered end 24.

Preferably, the through hole 70 crosses the wheel chock 8 from a stop ramp 74 for the associable vehicle wheel to a ground support wall of the same wheel chock 8.

The through hole 70 is preferably counter-shaped with respect to body 16 of the multiple support device 4.

Wheel chocks 8 associable with the multiple support device 4 of the kit can be of the fixed type.

Preferably, the kit comprises at least one wheel chock 8 of the foldable type.

According to a possible embodiment, the foldable wheel chocks 8 comprise a stop ramp 8 having a front face 78 shaped to interface with a vehicle wheel, extending from a first support base 80 to a first vertex 82.

Foldable wheel chocks 8 further comprise a support wall 84, extending from a second support base 86 to a second vertex 88.

The stop ramp 74 and the support wall 84 are hinged by at least one pivot pin 90 at the respective first and second vertexes 82, 88 so that they can rotate between a use configuration, in which the stop ramp 74 and the support wall 84 form a wedge or bridge structure tapering towards the pivot pin 90, to a non-use or rest configuration, in which the stop ramp 74 and the support wall 84 are arranged parallel to each other.

In such a non-use or rest configuration, the wheel chock 8 takes a flat and particularly compact configuration and can be advantageously inserted and supported on the support rod 12 of the multiple support device 4.

As can be appreciated from the above description, the present invention allows overcoming the drawbacks of the prior art.

Firstly, the present invention allows locking, on the same support device, at least one wheel chock at a time, and preferably two wheel chocks arranged in series with each other.

The wheel chocks are effectively locked without being able to rotate, oscillate or hit each other during the travel of the vehicle.

Moreover, the solution is particularly compact in terms of volume and is also lightweight.

Moreover, the support device is not a receptacle for dust, mud, and dirt like certain solutions of the known art.

Whether single or multiple, the support device according to the invention is also safe, given that it includes the safety catch which prevents the loss of wheel chocks if they are uncoupled from the respective fastening lugs.

The kit according to the present invention is particularly affordable to manufacture and space-saving.

In order to meet contingent, specific needs, those skilled in the art can make several changes and variations to the solutions described above.

The scope of protection of the present invention is defined by the following claims.

## Claims

1. A kit comprising at least one multiple support device (4) for wheel chocks (8), said at least one multiple support device comprising
- a support rod (12) having a body (16) extending along a main extension axis (X-X), from an attachment end (20) to an associable vehicle frame, to a cantilevered end (24), adapted to receive as an insertion at least one wheel chock (8) for said vehicle,
- the body (16) being provided with at least one fastening lug (28) projecting from at least one side wall (32) of the body (16) so as to intercept and lock as an undercut an associable wheel chock (8), insertable on the body (16) along an insertion direction (S-S) parallel to said main extension axis (X-X),
the kit further comprising at least one wheel chock (8), wherein said at least one wheel chock (8) is provided with a through hole (70), parallel to said body (16) and shaped to be inserted on the body (16) of the multiple support device (4), on the side of the cantilevered end (24),
the kit being **characterised in that** the through hole (70) crosses the wheel chock (8) from a stop ramp (74) for the associable vehicle wheel to a ground support wall of the wheel chock (8).

2. A kit according to claim 1, wherein the body is provided with at least two fastening lugs (28) spaced apart along the main extension axis (X-X) so as to allow the locking of at least two wheel chocks (8) arranged in series along the insertion direction (S-S).

3. A kit according to claim 1 or 2, wherein the at least one fastening lug (28) has a wedge shape comprising a first insertion ramp (36) facing the cantilevered end (24) and a second locking ramp (40) facing the attachment end (20) .

4. A kit according to claim 3, wherein said insertion ramps (36) and locking ramps (40) are connected to one another at a chamfered vertex (44).

5. A kit according to claim 3 or 4, wherein said insertion ramps (36) and locking ramps (40) have different inclinations with respect to a plane perpendicular to said side wall (32) of the body (16).

6. A kit according to any one of claims 1 to 5, wherein said fastening lugs (28) are elastic lugs and have a recess (48) at the side wall (32) of the body (16) so as to bend and at least partially enter the recess (48) when inserting and/or extracting the wheel chocks (8) to/from the multiple support device (4).

7. A kit according to any one of claims 1 to 6, wherein the body (16) has pairs of fastening lugs (28) arranged at the same axial position, along the main extension axis (X-X), and on side walls (32) of the body (16) opposite to each other with respect to a transverse direction (T-T), perpendicular to the main extension axis (X-X).

8. A kit according to any one of claims 1 to 7, wherein the body (16), at the cantilevered end (24), comprises a safety catch (52) shaped to move from a release position, in which it does not interfere with a section of the body (16) with respect to a cross-section plane perpendicular to said main extension axis (X-X), to allow the insertion of said at least one wheel chock (8) through said cantilevered end (24) parallel to said main extension axis (X-X), to a locking position, in which it interferes with said section so as to prevent the extraction of said at least one wheel chock (8) from the side of said cantilevered end (24), parallel to the main extension axis (X-X).

9. A kit according to claim 8, wherein the safety catch (52) is an element rotating about a pin (56) parallel to the main extension axis (X-X), or wherein the safety catch (52) is an element translating along a transverse direction (T-T), directed along a plane perpendicular to the main extension axis (X-X).

10. A kit according to any one of claims 8 to 9, wherein the safety catch (52) is shaped to perform an end-of-stroke snap movement upon reaching the locking position.

11. A kit according to any one of claims 1 to 10, wherein the through hole (70) is counter-shaped with respect to the body (16) of the multiple support device (4).

12. A kit according to any one of claims 1 to 11, wherein said at least one wheel chock (8) is of the foldable type.

13. A kit according to claim 12, wherein said at least one foldable wheel chock (8) comprises:
- a stop ramp (74) having a front face (78) shaped to interface with a vehicle wheel, extending from a first support base (80) to a first vertex (82),
- a support wall (84), extending from a second support base (86) to a second vertex (88),
- wherein the stop ramp (74) and the support wall (84) are hinged by at least one pivot pin (90) at the respective first and second vertexes (82, 88) so that they can rotate between a use configuration, in which the stop ramp (74) and the support wall (84) form a wedge or bridge structure tapering towards the pivot pin (90), to a non-use or rest configuration, in which the stop ramp (74) and the support wall (84) are arranged parallel to each other.

## Patentansprüche

1. Bausatz, umfassend wenigstens eine Mehrfach-Halterungsvorrichtung (4) für Radkeile (8), wobei die wenigstens eine Mehrfach-Halterungsvorrichtung umfasst:
- eine Halterungsstange (12), welche einen Körper (16) aufweist, welcher sich entlang einer Haupterstreckungsachse (X-X) von einem Anbringungsende (20) an einem zuordenbaren Fahrzeugrahmen zu einem freitragenden Ende (24) erstreckt, welches dazu eingerichtet ist, als einen Einsatz wenigstens einen Radkeil (8) für das Fahrzeug aufzunehmen,
- wobei der Körper (16) mit wenigstens einem Befestigungsansatz (28) bereitgestellt ist, welcher von wenigstens einer Seitenwand (32) des Körpers (16) vorstehet, um als eine Hinterschneidung einen zuordenbaren Radkeil (8) abzufangen und zu verriegeln, welcher an dem Körper (16) entlang einer Einsatzrichtung (S-S) parallel zu der Haupterstreckungsachse (X-X) einsetzbar ist,
wobei der Bausatz ferner wenigstens einen Radkeil (8) umfasst, wobei der wenigstens eine Radkeil (8) mit einem Durchgangsloch (70) bereitgestellt ist, welches parallel zu dem Körper (16) ist und geformt ist, um an dem Körper (16) der Mehrfachhalterungsvorrichtung (4) an der Seite des freitragenden Endes (24) eingesetzt zu werden,
wobei der Bausatz **dadurch gekennzeichnet ist, dass** das Durchgangsloch (70) den Radkeil (8) von einer Anschlagrampe (74) für das zuordenbare Fahrzeugrad zu einer Bodenhalterungswand des Radkeils (8) kreuzt.

2. Bausatz nach Anspruch 1, wobei der Körper mit wenigstens zwei Befestigungsansätzen (28) bereitgestellt ist, welche entlang der Haupterstreckungsachse (X-X) beabstandet sind, um das Verriegeln wenigstens zweier Radkeile (8) zu erlauben, welche in Reihe entlang der Einsatzrichtung (S-S) angeordnet sind.

3. Bausatz nach Anspruch 1 oder 2, wobei der wenigstens eine Befestigungsansatz (28) eine Keilform aufweist, welche eine erste Einsatzrampe (36), welche dem freitragenden Ende (24) zugewandt ist, und eine zweite Verriegelungsrampe (40) umfasst, welche dem Anbringungsende (20) zugewandt ist.

4. Bausatz nach Anspruch 3, wobei die Einsatzrampen (36) und die Verriegelungsrampen (40) an einem abgeschrägten Eckpunkt (44) miteinander verbunden sind.

5. Bausatz nach Anspruch 3 oder 4, wobei die Einsatzrampen (36) und die Verriegelungsrampen (40) verschiedene Neigungen in Bezug auf eine Ebene aufweisen, welche senkrecht zu der Seitenwand (32) des Körpers (16) ist.

6. Bausatz nach einem der Ansprüche 1 bis 5, wobei die Befestigungsansätze (28) elastische Ansätze sind und eine Aussparung (48) an der Seitenwand (32) des Körpers (16) aufweisen, um sich zu biegen und wenigstens teilweise in die Aussparung (48) einzutreten, wenn die Radkeile (8) in die Mehrfach-Halterungsvorrichtung (4) eingesetzt und/oder aus dieser entnommen werden.

7. Bausatz nach einem der Ansprüche 1 bis 6, wobei der Körper (16) Paare von Befestigungsansätzen (28) aufweist, welche an der gleichen axialen Position entlang der Hauptachse (X-X) und an Seitenwänden (32) des Körpers (16) einander entgegengesetzt in Bezug auf eine Querrichtung (T-T) angeordnet sind, welche senkrecht zu der Haupterstreckungsachse (X-X) ist.

8. Bausatz nach einem der Ansprüche 1 bis 7, wobei der Körper (16) an dem freitragenden Ende (24) eine Sicherungsraste (52) umfasst, welche derart geformt ist, dass sie sich von einer Freigabeposition, in welcher sie nicht mit einem Abschnitt des Körpers (16) in Bezug auf eine Querschnittsebene, welche senkrecht zu der Haupterstreckungsachse (X-X) ist, wechselwirkt, um den Einsatz des wenigstens einen Radkeils (8) durch das freitragende Ende (24) parallel zu der Haupterstreckungsachse (X-X) zu erlauben, in eine Verriegelungsposition bewegt, in welcher sie mit dem Abschnitt wechselwirkt, um das Entnehmen des wenigstens einen Radkeils (8) von der Seite des freitragenden Endes (24) parallel zu der Haupterstreckungsachse (X-X) zu verhindern.

9. Bausatz nach Anspruch 8, wobei die Sicherungsraste (52) ein Element ist, welches um einen Stift (56) rotiert, welcher parallel zu der Haupterstreckungsachse (X-X) ist, oder wobei die Sicherungsraste (52) ein Element ist, welches entlang einer Querrichtung (T-T) verlagerbar ist, gerichtet/geführt entlang einer Ebene, welche senkrecht zu der Haupterstreckungsachse (X-X) ist.

10. Bausatz nach einem der Ansprüche 8 bis 9, wobei die Sicherungsraste (52) geformt ist, um eine Hubende-Einrastbewegung auf ein Erreichen der Verriegelungsposition hin durchzuführen.

11. Bausatz nach einem der Ansprüche 1 bis 10, wobei das Durchgangsloch (70) in Bezug auf den Körper (16) der Mehrfach-Halterungsvorrichtung (4) gegengeformt ist.

12. Bausatz nach einem der Ansprüche 1 bis 11, wobei der wenigstens eine Radkeil (8) vom klappbaren Typ ist.

13. Bausatz nach Anspruch 12, wobei der wenigstens eine klappbare Radkeil (8) umfasst:
- eine Anschlagrampe (74), welche eine vordere Fläche (78) aufweist, welche geformt ist, um einem Fahrzeugrad zugewandt zu sein, und sich von einer ersten Halterungsbasis (80) zu einem ersten Eckpunkt (82) erstreckt,
- eine Halterungswand (84), welche sich von einer zweiten Halterungsbasis (86) zu einem zweiten Eckpunkt (88) erstreckt,
- wobei die Anschlagrampe (74) und die Halterungswand (84) durch wenigstens einen Schwenkstift (90) an den jeweiligen ersten und zweiten Eckpunkten (82, 88) gelenkig verbunden sind, so dass sie zwischen einer Verwendungskonfiguration, in welcher die Anschlagrampe (74) und die Halterungswand (84) eine Keil- oder Brückenstruktur bilden, welche sich in Richtung des Schwenkstiftes verjüngt, und einer Nicht-Verwendungs- oder Ruhekonfiguration rotieren können, in welcher die Anschlagrampe (74) und die Halterungswand (84) parallel zueinander angeordnet sind.

## Revendications

1. Kit comprenant au moins un dispositif de support multiple (4) pour des cales de roue (8), ledit au moins un dispositif de support multiple comprenant
- une tige de support (12) comportant un corps (16) s'étendant le long d'un axe d'extension principal (X-X), depuis une extrémité de raccordement (20) à un châssis du véhicule associable, jusqu'à une extrémité en porte-à-faux (24), apte à recevoir, en tant qu'enfichage, au moins une cale de roue (8) pour ledit véhicule,
- le corps (16) étant pourvu d'au moins une patte de fixation (28) faisant saillie depuis au moins une paroi latérale (32) du corps (16) de manière à intercepter et verrouiller, en tant que contre-dépouille, une cale de roue associable (8) enfichable sur le corps (16) le long d'une direction d'enfichage (S-S) parallèle audit axe d'extension principal (X-X),
le kit comprenant en outre au moins une cale de roue (8), dans lequel ladite au moins une cale de roue (8) est pourvue d'un trou traversant (70), parallèle audit corps (16) et façonné pour être enfiché sur le corps (16) du dispositif de support multiple (4), sur le côté de l'extrémité en porte-à-faux (24),
le kit étant **caractérisé en ce que** le trou traversant (70) traverse la cale de roue (8) depuis une rampe de butée (74) pour la roue de véhicule associable jusqu'à une paroi de support au sol de la cale de roue (8).

2. Kit selon la revendication 1, dans lequel le corps est pourvu d'au moins deux pattes de fixation (28) espacées le long de l'axe d'extension principal (X-X) de manière à permettre le verrouillage d'au moins deux cales de roue (8) agencées en série le long de la direction d'enfichage (S-S).

3. Kit selon la revendication 1 ou 2, dans lequel ladite au moins une patte de fixation (28) a une forme de coin comprenant une première rampe d'enfichage (36) orientée vers l'extrémité en porte-à-faux (24) et une seconde rampe de verrouillage (40) orientée vers l'extrémité de raccordement (20).

4. Kit selon la revendication 3, dans lequel lesdites rampes d'enfichage (36) et lesdites rampes de verrouillage (40) sont reliées les unes aux autres à un sommet biseauté (44).

5. Kit selon la revendication 3 ou 4, dans lequel lesdites rampes d'enfichage (36) et lesdites rampes de verrouillage (40) ont des inclinaisons différentes par rapport à un plan perpendiculaire à ladite paroi latérale (32) du corps (16).

6. Kit selon l'une quelconque des revendications 1 à 5, dans lequel lesdites pattes de fixation (28) sont des pattes élastiques et comprennent un évidement (48) à la paroi latérale (32) du corps (16) de manière à fléchir et à entrer au moins partiellement dans l'évidement (48) lors de l'enfichage et/ou de l'extraction des cales de roue (8) sur/depuis le dispositif de support multiple (4).

7. Kit selon l'une quelconque des revendications 1 à 6, dans lequel le corps (16) comprend des paires de pattes de fixation (28) agencées à la même position axiale, le long de l'axe d'extension principal (X-X), et sur des parois latérales (32) du corps (16) à l'opposé les unes des autres par rapport à une direction transversale (T-T) perpendiculaire à l'axe d'extension principal (X-X).

8. Kit selon l'une quelconque des revendications 1 à 7, dans lequel le corps (16), à l'extrémité en porte-à-faux (24), comprend un cran de sécurité (52) façonné pour se déplacer depuis une position de libération, à laquelle il n'interfère pas avec une section du corps (16) par rapport à un plan de coupe transversale perpendiculaire audit axe d'extension principal (X-X), pour permettre l'enfichage de ladite au moins une cale de roue (8) par ladite extrémité en porte-à-faux (24) parallèlement audit axe d'extension principal (X-X), jusqu'à une position de verrouillage, à laquelle il interfère avec ladite section de manière à empêcher l'extraction de ladite au moins une cale de roue (8) depuis le côté de ladite extrémité en porte-à-faux (24), parallèlement à l'axe d'extension principal (X-X).

9. Kit selon la revendication 8, dans lequel le cran de sécurité (52) est un élément rotatif autour d'une broche (56) parallèle à l'axe d'extension principal (X-X), ou dans lequel le cran de sécurité (52) est un élément en translation le long d'une direction transversale (T-T), dirigée le long d'un plan perpendiculaire à l'axe d'extension principal (X-X).

10. Kit selon la revendication 8 ou 9, dans lequel le cran de sécurité (52) est façonné pour réaliser un mouvement d'encliquetage en fin de course lorsque la position de verrouillage est atteinte.

11. Kit selon l'une quelconque des revendications 1 à 10, dans lequel le trou traversant (70) est en contreforme par rapport au corps (16) du dispositif de support multiple (4).

12. Kit selon l'une quelconque des revendications 1 à 11, dans lequel ladite au moins une cale de roue (8) est de type repliable.

13. Kit selon la revendication 12, dans lequel ladite au moins une cale de roue repliable (8) comprend :
- une rampe de butée (74) ayant une face avant (78) façonnée pour être en interface avec une roue de véhicule, s'étendant depuis une première base de support (80) jusqu'à un premier sommet (82),
- une paroi de support (84), s'étendant depuis une seconde base de support (86) jusqu'à un second sommet (88),
- dans lequel la rampe de butée (74) et la paroi de support (84) sont articulées par au moins une broche de pivotement (90) aux premier et second sommets (82, 88) respectifs de sorte qu'elles puissent tourner entre une configuration d'utilisation, dans laquelle la rampe de butée (74) et la paroi de support (84) forment une structure de coin ou de pont s'effilant vers la broche de pivotement (90), et une configuration d'inutilisation ou de repos, dans laquelle la rampe de butée (74) et la paroi de support (84) sont agencées parallèlement l'une à l'autre.
